# EUROPEAN PATENT APPLICATION

(11) **EP 4 495 166 A1**
(43) Date of publication of application: **22.01.2025**
(21) Application number: 23791271.2
(22) Date of filing: 19.04.2023
(51) Int. Cl.: C08G 65/40

(54) **POLYARYLETHERKETONE WITH WIDE MOLECULAR WEIGHT DISTRIBUTION AND PREPARATION METHOD THEREFOR**

(30) Priority: 22.04.2022 CN 202210425987
(71) Applicant: Jilin Joinature Polymer Co., Ltd., Changchun, Jilin 130113 (CN)
(72) Inventor: XIE, Huaijie, Changchun, Jilin 130113 (CN); JI, Ran, Changchun, Jilin 130113 (CN); BIAN, Jiang, Changchun, Jilin 130113 (CN); TONG, Yanling, Changchun, Jilin 130113 (CN); BI, Xin, Changchun, Jilin 130113 (CN)
(74) Representative: Isarpatent
(86) International application number: PCT/CN2023/089208
(87) International publication number: WO 2023/202616

(57) **Abstract**

A polyaryletherketone with a wide molecular weight distribution and a preparation method therefor. The polyaryletherketone has a Tg of at least 143 °C, a Tm of at least 330 °C, a crystallinity of at least 20%, a PDI of 2.5-2.9, and a gel content of as low as 0.2%. An extrusion blending or solution blending method is used to prepare the polyaryletherketone with the wide molecular weight distribution and without a high branching degree. When the viscosity of the polyaryletherketone is the same at low shear strength, the viscosity at high shear strength is smaller, such that the processing difficulty of a product can be significantly reduced, expanding the applicable range of the product. The gel content of the polyaryletherketone is remarkably reduced, resulting in a more streamlined process in the preparation of a molded product without significant fish-eye appearances on a film due to aggregation of the gel.

## Description

### CROSS REFERENCE TO RELATED APPLICATION

The present application claims priority to Chinese patent application number 202210425987.6, filed by the applicant JILIN JOINATURE POLYMER CO., LTD. on April 22, 2022, with the title "Polyaryletherketone with wide molecular weight distribution and preparation method therefor", the contents of which are incorporated herein by reference in its entirety.

### TECHNICAL FIELD

The present invention relates to a polyaryletherketone with wide molecular weight distribution and a preparation method therefor, belonging to the technical field of polymer materials.

### BACKGROUND

Polyetheretherketones are high-performance thermoplastics with excellent mechanical properties and high crystallinity, and have a glass transition temperature (Tg) of 143°C and a melting point (Tm) of 343°C. In order to reduce the difficulty of processing, we need polyetheretherketone with wider molecular weight distribution, but the existing polyetheretherketone with wider molecular weight is obtained by increasing the branching degree of the molecular chain, and the production of chain branching tends to not only lower the tensile strength of the polymer but also increase the gel rate of the product. When the gel rate of the polymer is too high, the viscosity of the material increases, and the high-temperature stabilization effect of the material also becomes poor. This is not conducive to material processing, and after the material is processed, materials with high gel content tend to have significantly more defects compared with those with less gel, which has an impact on the mechanical properties, and when preparing thin film products, an excessively high gel rate can lead to the formation of fish-eyes on the film surface, thereby reducing the quality. Therefore, there is a need to develop a new method for preparing polyaryletherketone with wide molecular weight distribution.

### SUMMARY OF THE INVENTION

The object of the present invention is to provide a polyaryletherketone with wide molecular weight distribution. The present invention prepares a polyaryletherketone with wide molecular weight distribution by blending a high molecular weight and a low molecular weight polyaryletherketone. Specifically, extrusion blending and solution blending are used. The polyaryletherketone provided by the present invention has a wider molecular weight distribution and does not have a higher degree of branching.

The polyaryletherketone provided by the present invention has a Tg of at least 143°C, a Tm of at least 330°C, a crystallinity of at least 20%, a PDI of 2.5- 2.9, and a gel content of ≥ 0.2%; and
the polyaryletherketone has repeating units of the following chemical formula:

-O-Ph-O-Ph-CO-Ph-

In the formula, Ph represents a phenylene moiety; the phenylene moiety of each of the repeating unit independently connects to the atom to which it is connected by a 1,4-linking bond or a 1,2-linking bond. When a phenylene moiety includes 1,2-linking bond, this moiety will be in the amorphous phase of the polymer, and the crystalline phase will include the phenylene moiety with a 1,4-linking bond. In many cases, the crystalline phase is preferred, and correspondingly, preferably includes a phenyl moiety having a 1,4-linking bond.

Preferably, each Ph moiety in the repeating unit of the chemical formula is connected to the moiety to which it is connected, by a 1,4-linking bond.

Preferably, the polyaryletherketone includes the following repeating units, preferably at least one of the following repeating units, such as one, two or more thereof:

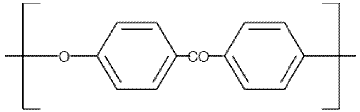

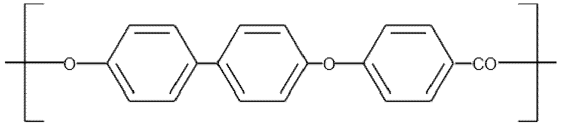

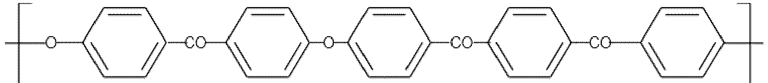

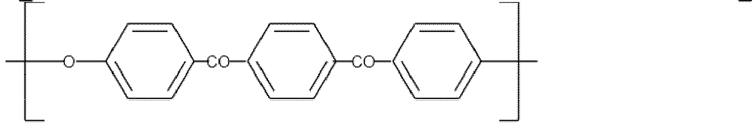

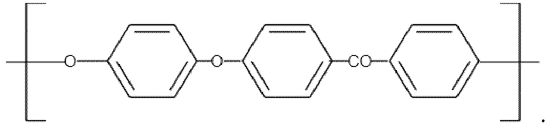

The polyaryletherketone of the present invention is preferably a polyetheretherketone.

The present invention provides a method for preparing polyaryletherketone with wide molecular weight distribution by extrusion blending, which specifically includes the following steps:
S1. subjecting an organic dihalide and a bisphenol to nucleophilic condensation polymerization reaction under an inert atmosphere and in the presence of an alkali metal carbonate; wherein two sets of the nucleophilic condensation polymerization reactions are performed simultaneously, to form two sets of reaction systems;
S2. adding a salt to both of the two sets of reaction systems in step S1 to terminate the reactions;
S3. adding an organic halide to both of the two sets of the reaction systems in step S2 for end-capping;
S4. cooling the two sets of reaction systems in step S3, followed by purification to obtain a high molecular weight polyaryletherketone and a low molecular weight polyaryletherketone respectively;
S5. mixing the high molecular weight polyaryletherketone and the low molecular weight polyaryletherketone to form a mixture, and then subjecting the mixture to extrusion blending, to obtain the polyaryletherketone.

The present invention also provides a method for preparing polyaryletherketone with wide molecular weight distribution by solution blending, which specifically includes the following steps:
SI. subjecting an organic dihalide and a bisphenol to nucleophilic condensation polymerization reaction under an inert atmosphere and in the presence of an alkali metal carbonate; wherein two sets of the nucleophilic condensation polymerization reactions are performed, and the two sets of the nucleophilic condensation polymerization reactions are controlled to be terminated at the same time;
SII. adding a salt to both of the two sets of reaction systems in step SI to terminate the reactions, and then adding an organic halide for end-capping;
SIII. mixing the two reaction systems of step SII in a molten aromatic sulfone, stirring and keeping the temperature constant for 15-30 minutes, followed by cooling and purifying in sequence, to obtain the polyaryletherketone.

In the above preparation method, in step S1 or SI, the alkali metal carbonate is sodium carbonate and potassium carbonate;
a molar ratio of the sodium carbonate to the bisphenol is 1.001-1.14;
a ratio of the potassium carbonate to the sodium carbonate is 0.020-0.035, and this preferred range can provide a higher reaction rate, and can effectively reduce unnecessary side reactions and inhibit possible excessive chain branching;
a solvent used in the nucleophilic condensation polymerization is an aromatic sulfone, and the aromatic sulfone can be selected from diphenyl sulfone, dibenzothiophene dioxide, phenoxathiin dioxide and 4-phenylsulfonyl biphenyl, preferably diphenyl sulfone.

In the above preparation method, in step S1 or SI, the organic dihalide is 4,4'-difluorobenzophenone, 2,4'-difluorobenzophenone, 4-chloro-4'- fluorobenzophenone, 4,4'-dichlorobenzophenone, 1,4-bis(4'-fluorobenzoyl)benzene, or a mixture thereof, preferably 4,4'-difluorobenzophenone, 2,4'-difluorobenzophenone, or a mixture thereof;
the bisphenol is hydroquinone, 4,4'-dihydroxybiphenyl, 4,4'-dihydroxybenzophenone, 4,4'-dihydroxydiphenyl ether, 1,4-dihydroxynaphthalene, 2,3-dihydroxynaphthalene or a mixture thereof, preferably hydroquinone;
a molar ratio of the organic dihalide to the bisphenol is 1.002-1.03. The molecular weight of the product can be controlled by adjusting the molar ratio. In the context of the present invention, the greater the molar ratio, the smaller the molecular weight of the product is.

In the above preparation method, in step S1 or SI, a reaction temperature of the nucleophilic polycondensation is 180°C-300°C, and a reaction time of the nucleophilic polycondensation is 7.5h-8h. The molecular weight of the product can be controlled by adjusting the reaction time. Generally speaking, the longer the reaction time, the greater the molecular weight of the product obtained.

In the above preparation method, in step S2 or SII, the salt is an alkali metal salt selected from lithium carbonate, lithium chloride, lithium iodide, lithium bromide, or lithium sulfate;
a molar ratio of the salt to the bisphenol is 0.02-0.18:1;
in step S3 or SII, the organic halide can be a monofluorine-substituted halide, in which one substituent on one aryl group is fluorine, and one substituent on the other aryl group is hydrogen atom, -SO₃, -NO₂, -NH₃, -Cl, -Br, or -I, specifically can be 4-fluorobenzophenone, 4-fluoro-4-bromobenzophenone, 4-fluoro-4-iodobenzophenone, 4-fluoro-4-chlorobenzophenone, 4-fluoro-4-nitrobenzophenone, 2-chloro-4-fluorobenzophenone, or 4-fluoro-4-chlorobenzophenone, preferably 4-fluorobenzophenone;
preferably, the organic halide is added 15 minutes after adding the salt;
the time for adding the salt and the organic halide is controlled to be within 2 minutes or less;
the end-capping is carried out under the following conditions: the temperature is 290 -315°C; the time is 15-45min;
in step S4, the reaction product is usually placed on a stainless steel plate for cooling.

After the cooling, the cooled product can be ground into coarse powder. Preferably, the maximum size is less than 1.3mm and the minimum size is greater than 0.22mm. A suitable separation device can be used to take out the organic solvent. Usually, a Soxhlet extractor is used for separation. Preferably a partially water-miscible organic solvent preferably solvents such as acetone is used for extraction to remove solvents such as diphenyl sulfone. Then ultrapure water or deionized water can be used to wash away water-soluble organic solvents such as acetone, followed by rinsing with deionized water or pure water, and then the blend is heated, preferably at a temperature of 50-60°C. Washing is repeated for five times thereby removing water-soluble residues such as potassium and sodium salts. This process can be controlled by detecting the conductivity of the wash water. Once it reaches the required range, the product can be filtered from the wash water immediately, and the filtered material is dried to obtain recyclable PAEK. The residual solvent residue in the resulting PAEK should be less than 0.03%.

In the above preparation method, in step S5, the steps of extrusion blending are as follows:
mixing the high molecular weight polyaryletherketone and the low molecular weight polyaryletherketone to form a mixture, and subject the mixture to granulation through an extruder;
the extruder is a co-rotating twin-screw extruder.

In the above preparation method, in step S5, a mass ratio of the high molecular weight polyaryletherketone to the low molecular weight polyaryletherketone is 2-9:1 -8, preferably 9:1, 8:2, 7:3, 3:7 or 2:8, most preferably 7:3.

The method also includes 1 to 3 times of extruding granulation steps to mix the two polyaryletherketones more fully, improve dispersion, and thereby increase molecular weight distribution.

In the above preparation method, in step SII, based on the mass of the organic dihalide, a ratio of the two reaction systems is 2-9:1-8, preferably 9:1, 8:2, 7:3, 3:7 or 2:8, most preferably 7:3.

### DESCRIPTION OF THE DRAWINGS

The description and drawings that constitute a part of the present application are used to provide a further understanding of the present application. The illustrative embodiments of the present application and their descriptions are used to explain the present application and do not constitute an improper limitation of the present application. In the drawings:

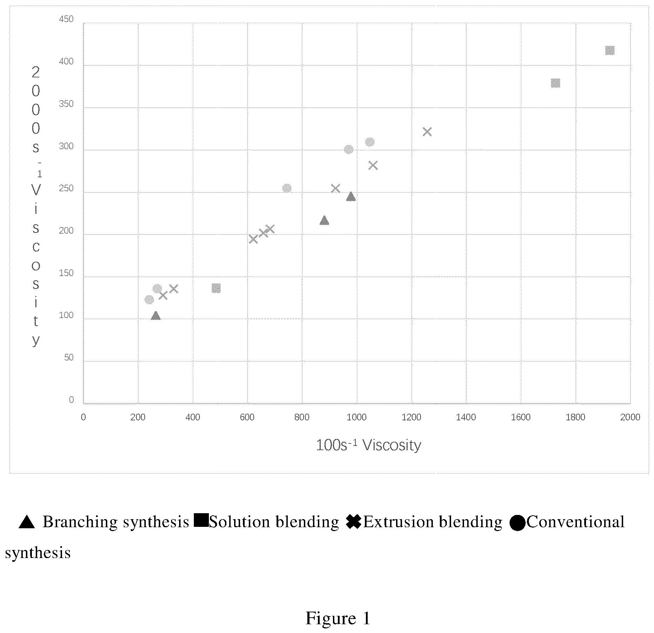

Figure 1 shows the viscosity curves of polyetheretherketones prepared in Examples 1-8 and Comparative Example 2 under high shear and low shear.

### EMBODIMENTS OF THE INVENTION

Experimental methods used in the following examples are conventional methods unless otherwise specified.

Materials, reagents, etc. used in the following examples can all be obtained from commercial sources unless otherwise specified.

The test methods in the following examples are as follows:

### 1. Test method for viscosity

Viscosity is the ratio of shear stress to shear rate, in Pa.s.

The method of measuring the fluidity of plastics using a capillary rheometer, which can also be called the apparent viscosity test method, is carried out according to standards of GB/T 25278-2010, ISO 11443, ASTM D3835 , using the Dynisco laboratory capillary rheometer LCR7001. In this method, the plastic melt is extruded through a capillary die of known size, and the test pressure is tested under the condition of a specified volume flow rate.

The die of the equipment used has the following dimensions: 1mm diameter and 20mm length. The aspect ratio (L/D) of the die is 20.

Before measurement, the test sample should be conditioned in accordance with the regulations of GB/T2918-1998. The conditions are temperature 23±2°C, humidity 50±10%, and time 24±0.5 hours.

Before testing, it is ensured that each component reaches thermal equilibrium at the test temperature. Then loading is started. The sample is added into the barrel in small portions and compacted immediately with a plunger to prevent air from being introduced. The material is loaded to about 12.5mm from the top of the barrel. The general material usage is 10-15g of polymer, and the loading is completed within 2 minutes.

The preheating timer is started immediately after adding materials, preheating for 5 minutes, the test conditions are 400°C, and the shear rate is 100s⁻¹, 200s⁻¹, 500s⁻¹, 1000s⁻¹, 2000s⁻¹, 5000s⁻¹, 10000s⁻¹.

### 2. Testing method for molecular weight distribution

The steps using gel chromatography to test the molecular weight of PEEK are as follows.

First, the mobile phase is prepared, using 1,2,4-trichlorobenzene and 4-chlorophenol as the mobile phase; PEEK is dissolved, and 0.1g of PEEK is dissolved in 5ml of 4-chlorophenol; the reagent bottle is covered with an aluminum cap, placed on a heating oscillator at a temperature of 180°C, and heated until completely dissolved; the reagent bottle is cooled to room temperature, added with 5ml of 1,2,4-trichlorobenzene. A syringe is used to filter the solution through a 0.45µm glass fiber filter; the filtrate is subjected to gel chromatography and the data obtained are analyzed.

### 3. Gel test method

The gel test uses a sand core funnel. A 40ml G4 sand core funnel is placed in an oven at a constant temperature of 150°C for 8 hours. After cooling, it is taken out and let stand. An analytical balance is used to weigh the weight of the sand core funnel W1; an analytical balance is used to take a 0.1g PEEK sample. The sample is put into a reagent bottle, added with 5ml of 4-chlorophenol, and then it is put into a shaker at a constant temperature of 180°C for 2 hours. After it is completely dissolved and no residue remains, it is placed on the workbench to cool to room temperature, and then added with 1,2,4-trichlorobenzene, and let stand for 5 minutes. 5 solutions of the same batch are poured into the sand core funnel for suction filtration, then 10ml of 4-chlorophenol is used for washing reagent bottle and sand core funnel, followed by suction filtration. Then the sand core is washed by using 25ml absolute ethanol, filtered through the funnel, and finally put into an oven to dry for 2 hours. After cooling, the funnel is taken out and weighed W2 with an analytical balance; (W2-W1)/0.5g×100% is the percentage of PEEK gel.

The invention will be further illustrated by the following non-limiting examples. Unless otherwise stated, amounts in these examples are expressed as percentages by weight.

### Example 1. Preparation of high molecular weight polyetheretherketone

A 3L open flask, equipped with a four-neck cap, stirrer, stirring paddle, nitrogen protection input device, thermocouple temperature detection device and open flask clamp, was used. 1425g (6.529mol) of diphenyl sulfone, 444.86g (purity 99.9%, 2.036mol) of 4,4-difluorobenzophenone, 223.35g (2.029mol) of hydroquinone, 245g (2.312mol) of finely ground sodium carbonate and 6.5g (0.047mol) of superior grade pure potassium carbonate were added thereto. High-purity nitrogen was used to purge and protect at a rate of 0.14L/min for 20 minutes to drain the air in the flask. The temperature was slowly raised to 140°C within 1 hour. At this time, the material melted. The stirring equipment was turned on and the material was stirred. The temperature was raised to 180°C at a heating rate of 2°C/min and maintained at the constant temperature for 60 minutes; then increased to 190°C at a heating rate of 1°C/min and maintained for 30 minutes; then the temperature raised to 200°C at a heating rate of 0.5°C and then maintained at the constant temperature for 30 minutes; then raised to 280°C at a heating rate of 1°C/min, and maintained at the constant temperature for 60 minutes. Finally, the temperature was raised to 300°C at a heating rate of 1°C/min. After maintaining at the constant temperature for 60 minutes, 10.17g (0.24mol) of lithium chloride was added to the flask. After stirring for 10 minutes, 6.64g (0.03mol) of 4-fluorobenzophenone was added for end-capping. Then the stirring was continuously performed for 30 min to terminate the reaction.

Finally, the product mixture obtained in the reactor was poured and placed flat on a stainless steel plate, and the mixture was allowed to cool to room temperature. The obtained reactant was crushed, ground and sieved using a pulverizer to obtain mixture particles with a mesh size between 15 and 60. 100g of the mixture particles was weighed and added to a Soxhlet extractor. Acetone was used as the solvent to extract the reaction solvent diphenyl sulfone and other remaining organic impurities in the powder particles. The extraction was repeated for 1 hour. Next, purified water was used to soak the filtered particles. When heating, the temperature was raised to 60°C, then the deionized water was poured out. The residue was rinsed with deionized water and then heated again. Rinse was repeated more than 5 times until the conductivity was 2-10 µS. The washed product was put into a vacuum drying box, the temperature in the chamber was set to 150°C, and the product was vacuum dried for 12 hours.

### Example 2. Preparation of low molecular weight polyetheretherketone

The preparation process of Example 2 was basically the same as that of Example 1. The difference was that when the reaction reached 280°C for 1 hour, 10.17g of lithium chloride was immediately added to the system. After stirring for 5 minutes, 4-fluorobenzophenone was added for end-capping. After stirring for 30 minutes, the system was poured out, cooled, crushed, and washed.

The polyetheretherketones prepared in Example 1 and Example 2 were dried and subjected to a viscosity test, and the results are shown in Table 1.

**Table 1 Viscosity of polyetheretherketones prepared in Example 1 and Example 2**

| Example | Viscosity, Pa·s(100s⁻¹) | Viscosity, Pa·s(2000s⁻¹) |
|---|---|---|
| 1 | 2173.7 | 528.3 |
| 2 | 80.8 | 48.2 |

After blending the products obtained in Examples 1 and 2 at mass ratios of 9:1, 8:2, and 7:3 respectively, a co-rotating twin-screw extruder with a screw diameter of 18 mm and an aspect ratio of 32:1 was used for extruding granulation, and the viscosity data are shown in Table 2.

**Table 2 Viscosity of polyetheretherketones prepared in Examples 1 and 2 after extrusion blending**

| | Proportion | Viscosity, Pa·s(100s⁻¹) | Viscosity, Pa·s(2000s⁻¹) |
|---|---|---|---|
| A₁ | 9:1 | 1256.8 | 321.4 |
| A₂ | 8:2 | 921.8 | 254.4 |
| A₃ | 7:3 | 622.0 | 194.4 |
| A₄ | 3:7 | 329.7 | 135.9 |
| A₅ | 2:8 | 290.7 | 128.1 |

### Comparative Example 1. Direct mixing of high molecular weight and low molecular weight polyetheretherketone

The materials obtained in Example 1 and Example 2 were directly mixed with a mixer in a mass ratio of 7:3, 8:2, and 9:1. The viscosity data are shown in Table 3.

**Table 3 Viscosity of polyetheretherketones prepared in Examples 1 and 2 after direct mixing**

| | Proportion | Viscosity, Pa·s(100s⁻¹) | Viscosity, Pa·s(2000s⁻¹) |
|---|---|---|---|
| B₁ | 9:1 | 1293.2 | 368.6 |
| B₂ | 8:2 | 1108.0 | 326.8 |
| B₃ | 7:3 | 827.5 | 263.5 |
| B₄ | 3:7 | 381.9 | 163.0 |
| B₅ | 2:8 | 284.2 | 141.0 |

### Example 3. Preparation of polyetheretherketone with wide molecular weight distribution by solution mixing method

The synthesis was carried out according to the synthesis methods of Example 1 and Example 2. The difference was that the amounts of the reactants were reduced in proportion to the original 0.9 of Example 1 and to the original 0.1 of Example 2, respectively. By controlling the reaction start time, the two reactions terminated at the same time, and the contents of the two reactors were poured into a 10L reactor at the same time. At this time, the temperature of the 10L reactor was 300°C, and there was 2kg of molten diphenyl sulfone in it. The reaction kettle was equipped with a turbine stirring paddle. The resulting mixture were stirred at high speed for 15 minutes and then released, cooled and solidified, and was purified and dried.

### Example 4

Example 3 was repeated, except that the amounts of the reactants were reduced in proportion to the original 0.8 and 0.2_{∘}

### Example 5

Example 3 was repeated, except that the amounts of the reactants were reduced in proportion to the original 0.2 and 0.8.

The viscosity data of the polyetheretherketones prepared in Examples 3-5 are shown in Table 4.

**Table 4 Viscosity of polyetheretherketones prepared in Examples 3-5**

| Example | Proportion | Viscosity, Pa·s(100s⁻¹) | Viscosity, Pa·s(2000s⁻¹) |
|---|---|---|---|
| 3 | 9:1 | 1924.4 | 417.4 |
| 4 | 8:2 | 1726.1 | 378.8 |
| 5 | 2:8 | 485.3 | 136.7 |

### Comparative Example 2

Example 1 was repeated, except that the quality of the 4,4-difluorodiphenophenone in the raw material was changed to prepare products with different molecular weights. Test melt index and viscosity data are as shown in Table 5.

**Table 5 Viscosity of polyetheretherketones prepared under various conditions in Comparative Example 2.**

| Example | No. | Changing amount | Viscosity, Pa·s(100s⁻¹) | Viscosity, Pa·s(2000s⁻¹) |
|---|---|---|---|---|
| 6 | C₁ | 4,4-difluorodiphenophenone 447.07g (2.049mol) | 1046.5 | 309.3 |
| 6 | C₂ | 4,4-difluorodiphenophenone 447.96g (2.053mol) | 969.7 | 300.5 |
| 6 | C₃ | 4,4-difluorodiphenophenone 449.28g (2.059mol) | 744.3 | 254.7 |
| 6 | C₄ | 4,4-difluorodiphenophenone 451.50g (2.069mol) | 269.8 | 136.0 |
| 6 | C₅ | 4,4-difluorodiphenophenone 453.71g (2.079mol) | 240.6 | 123.2 |

### Example 6

A 5000L reaction kettle for production was used to perform the polymerization reaction. The materials were scaled up according to Example 1 and Example 2 respectively, and post-processing was performed according to the conventional production process, to obtain coarse powder particles with a conventional appearance. The proportions of 8:2 and 9:1 were used for extruding granulation. The viscosity data are as shown in Table 6.

**Table 6 Viscosity of polyetheretherketones prepared in Example 6.**

| | Proportion | Viscosity, Pa·s(100s⁻¹) | Viscosity, Pa·s(2000s⁻¹) |
|---|---|---|---|
| E₁ | 9:1 | 1058.7 | 281.7 |
| E₂ | 8:2 | 682.6 | 206.5 |

### Example 7.

The product E2 obtained in Example 6 was subject to extruding granulation again, and the viscosity is as shown in Table 7.

**Table 7 Viscosity of polyetheretherketone prepared in Example 7.**

| Example | Extrusion times | Viscosity, Pa·s(100s⁻¹) | Viscosity, Pa·s(2000s⁻¹) |
|---|---|---|---|
| 7 | 2 | 658.3 | 201.7 |

### Comparative Example 3.

A branched synthesis route (the same as Example 1, but using a lower purity of 4,4-difluorodiphenophenone raw material) was used to conduct a synthesis experiment. The prepared polyetheretherketone was subjected to a viscosity test, and the viscosity is shown in Table 8.

**Table 8 Viscosity of polyetheretherketones prepared in Comparative Example 3**

| | Purity of 4,4-difluorodiphenophenone | Viscosity, Pa·s(100s⁻¹) | Viscosity, Pa·s(2000s⁻¹) | Excess amount ratio of 4,4-difluorodiphenopheno |
|---|---|---|---|---|
| F₁ | 98.9% | 978.3 | 245.1 | 1.015 |
| F₂ | 98.7% | 881.0 | 216.9 | 1.02 |
| F₃ | 98.3% | 264.6 | 104.3 | 1.03 |

The difference between the branched synthesis route and Example 1 was that the sources of 4,4-difluorodiphenophenone were changed. The purity of the 4,4-difluorodiphenophenone raw material of the conventional synthesis reached 99.8% to 99.9%, while the purity of the 4,4-difluorodiphenophenone raw material of the branched method was lower (98.3% to 98.9%). Among them, since the purity of the 4,4-difluorodiphenophenone raw material is lower, there is an excess of 4,4-difluorodiphenophenone compared with Example 1.

The materials of Examples 1-7 and Comparative Examples 1-3 were subjected to molecular weight distribution test and gel test, and the results are shown in Table 9.

The obtained products polyetheretherketones were subjected to the absorbance test (absorbance test: the product was dissloved with concentrated sulfuric acid and then tested by a spectrophotometer for the absorbance at 550 nm). The measured absorbance was 0.09-0.10, while the absorbance of the polyetheretherketone prepared in Example 1 was 0.22-0.23. From the absorbance test results, it can be determined that the polyetheretherketone prepared by the branched synthesis route absorbs less light at the 550nm wavelength, indicating that its carbonyl branching level is higher, and therefore the reduction in the purity of the 4,4-difluorodiphenophenone raw material results in the increase in the branching degree of the product and thus the wider molecular weight of the polyetheretherketone.

Through comparison, it is found that with respect to the product obtained according to the conventional process of Comparative Example 3, it can be seen that the relationship of the viscosity at 100s⁻¹ and 2000s⁻¹ of the extrusion blending material was better, which can also be seen from the molecular weight distribution (PDI) measured by gel chromatography. However, from the results of the direct hand mixing test (Comparative Example 1), it is found that no results consistent with the extrusion blending (A₁-A₅, E₁-E₂, Example 7) were obtained, which shows that mixing high and low molecular weight materials is a better process method, but it requires extremely thorough mixing. It can be seen from Example 7 that the more complete and uniform the mixing, the better the result, the better the dispersion of the high molecular weight materials and the low molecular weight materials, and the wider the molecular weight distribution.

In Examples 3-5, the obtained contents of the reaction kettle were directly mixed and stirred in the solution state after adding the terminator. Through testing, it is found that the obtained product also had a wider molecular weight distribution effect. This shows that high-speed blending in the solution state and twin-screw extrusion blending after obtaining the material can obtain consistent results.

By comparing the viscosity curve of conventional materials with the trend line of the examples, it can be seen that compared to the conventional product having the same viscosity of 100s⁻¹, the PEEK produced by the present invention always has a lower viscosity of 2000s⁻¹, which means that the PEEK with a wider molecular weight distribution has lower viscosity performance. As shown in Figure 1, the conventional synthesis products were the five products of Comparative Example 2 (C1...C5), the branched synthesis products were the three products of Comparative Example 3(F1 ...F3), the solution blending products were the products of Examples 3, 4, and 5, and the extrusion blending products were the products of the aforementioned Examples A2-A5 and B1-B4.

Moreover, after passing the gel test, it can be found that the gel content of the polyetheretherketone prepared by the method of the present invention is significantly lower than the product of the branched synthesis route, which reflects that the product prepared by the present invention has a lower degree of branching.

**Table 9 Viscosity, PDI and gel content of polyetheretherketones prepared in Examples 1-7 and Comparative Examples 1-3.**

| | Viscosity, Pa·s(100s⁻¹) | Viscosity, Pa·s(2000s⁻¹) | PDI | Gel content |
|---|---|---|---|---|
| 1 | 2173.7 | 528.3 | 2.1 | 0.21% |
| 2 | 80.8 | 48.2 | 2.1 | 0.37% |
| A₁ | 1256.8 | 321.4 | 2.5 | 0.44% |
| A₂ | 921.8 | 254.4 | 2.6 | 0.39% |
| A₃ | 622.0 | 194.4 | 2.7 | 0.42% |
| A₄ | 329.7 | 135.9 | 2.6 | 0.53% |
| A₅ | 290.7 | 128.1 | 2.5 | 0.49% |
| B₁ | 1293.2 | 368.6 | 2.1 | 0.66% |
| B₂ | 1108.0 | 326.8 | 2.1 | 0.57% |
| B₃ | 827.5 | 263.5 | 2.0 | 0.48% |
| B₄ | 381.9 | 163.0 | 2.2 | 0.63% |
| B₅ | 284.2 | 141.0 | 2.2 | 0.55% |
| 3 | 1924.4 | 417.4 | 2.7 | 0.24% |
| 4 | 1726.1 | 378.8 | 2.8 | 0.30% |
| 5 | 485.3 | 136.7 | 2.8 | 0.28% |
| C₁ | 1046.5 | 309.3 | 2.1 | 0.57% |
| C₂ | 969.7 | 300.5 | 2.2 | 0.64% |
| C₃ | 744.3 | 254.7 | 2.1 | 0.55% |
| C₄ | 269.8 | 136.0 | 2.2 | 0.76% |
| C₅ | 240.6 | 123.2 | 2.2 | 0.49% |
| E₁ | 1058.7 | 281.7 | 2.8 | 0.25% |
| E₂ | 682.6 | 206.5 | 2.8 | 0.23% |
| 7 | 658.3 | 201.7 | 2.9 | 0.31% |
| F₁ | 978.3 | 245.1 | 2.5 | 1.34% |
| F₂ | 881.0 | 216.9 | 2.4 | 1.22% |
| F₃ | 264.6 | 104.3 | 2.5 | 1.31% |

### Industrial applications

The present application has the following beneficial technical effects:
The polyaryletherketone provided by the present invention has the same viscosity under a low shear strength but a smaller viscosity under a high shear strength, which can significantly reduce the processing difficulty of the product and increase the applicable range of the product.

The gel content of the polyaryletherketone provided by the present invention is significantly reduced, the processing process when preparing molded products is simpler, and no obvious fish-eyes appear on the film due to the aggregation of gel.

## Claims

1. A polyaryletherketone, wherein:
the polyaryletherketone has a PDI in a range of 2.5-2.9 and a gel content of ≥0.2%.

2. The polyaryletherketone according to claim 1, wherein:
the polyaryletherketone comprises the following repeating units:

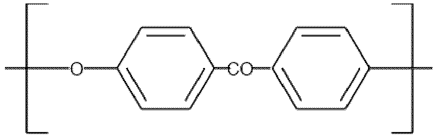

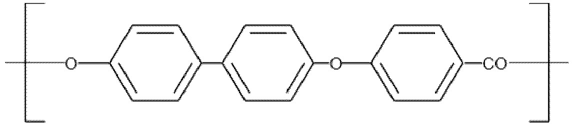

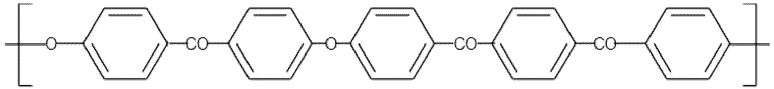

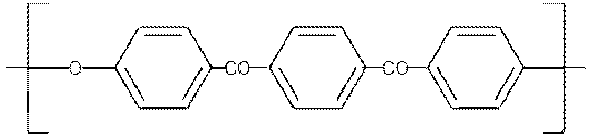

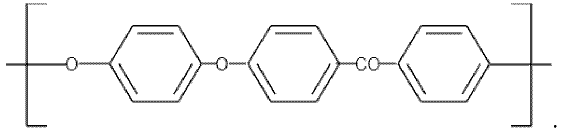

3. A preparation method for the polyaryletherketone according to claim 1 or 2, comprising the following steps:
S1. subjecting an organic dihalide and a bisphenol to nucleophilic condensation polymerization reaction under an inert atmosphere and in the presence of an alkali metal carbonate; wherein two sets of the nucleophilic condensation polymerization reactions are performed simultaneously, to form two sets of reaction systems;
S2. adding a salt to both of the two sets of reaction systems in step S1 to terminate the reactions;
S3. adding an organic halide to both of the two sets of the reaction systems in step S2 for end-capping;
S4. cooling the two sets of reaction systems in step S3, followed by purification to obtain a high molecular weight polyaryletherketone and a low molecular weight polyaryletherketone respectively;
S5. mixing the high molecular weight polyaryletherketone with the low molecular weight polyaryletherketone to form a mixture, and then subjecting the mixture to extrusion blending, to obtain the polyaryletherketone.

4. A preparation method for the polyaryletherketone according to claim 1 or 2, comprising the following steps:
SI. subjecting an organic dihalide and a bisphenol to nucleophilic condensation polymerization reaction under an inert atmosphere and in the presence of an alkali metal carbonate; wherein two sets of the nucleophilic condensation polymerization reactions are performed, and the two sets of the nucleophilic condensation polymerization reactions are controlled to terminate at the same time;
SII. adding a salt to both of the two sets of reaction systems in step SI to terminate the reactions, and then adding an organic halide for end-capping;
SIII. mixing the two reaction systems of step SII in a molten aromatic sulfone, stirring and keeping the temperature constant for 15 to 30 minutes, followed by cooling and purifying in sequence, to obtain the polyaryletherketone .

5. The preparation method according to claim 3 or 4, wherein: in step S1 or SI, the alkali metal carbonate is sodium carbonate and potassium carbonate;
a molar ratio of the sodium carbonate to the bisphenol is 1.001-1.14;
a ratio of the potassium carbonate to the sodium carbonate is 0.020-0.035;
a solvent is used in the nucleophilic condensation polymerization, the solvent is aromatic sulfone selected from diphenyl sulfone, dibenzothiophene dioxide, phenoxathiin dioxide, and 4-phenylsulfonylbiphenyl.

6. The preparation method according to any one of claims 3-5, wherein:
in step S1 or SI, the organic dihalide is 4,4'-difluorobenzophenone, 2,4'-difluorobenzophenone, 4-chloro-4'-fluorobenzophenone, 4,4'dichlorobenzophenone, 1,4-bis(4'-fluorobenzoyl)benzene, or a mixture thereof;
the bisphenol is hydroquinone, 4,4'-dihydroxybiphenyl, 4,4'-dihydroxybenzophenone, 4,4'-dihydroxydiphenyl ether, 1,4-dihydroxynaphthalene, 2,3-dihydroxynaphthalene, or a mixture thereof;
the molar ratio of the organic dihalide to the bisphenol is 1.002-1.03.

7. The preparation method according to any one of claims 3-6, wherein:
in step S1 or SI, the nucleophilic polycondensation reaction is performed at a temperature of 180°C-300°C, and the nucleophilic polycondensation reaction is performed for a time of 7.5-8h.

8. The preparation method according to any one of claims 3-7, wherein:
in step S3 or SII, the salt is an alkali metal salt selected from lithium carbonate, lithium chloride, lithium iodide, lithium bromide, or lithium sulfate;
a molar ratio of the salt to the bisphenol is 0.02-0.18:1.

9. The preparation method according to any one of claims 3-8, wherein in step S3 or SII, the organic halide is a monofluorine-substituted halide, and in the monofluorine-substituted halide, one substituent on one aryl group is fluorine, and one substituent on the other aryl group is a hydrogen atom, -SO₃,-NO₂,-NH₃, -Cl, -Br, or -I;
the end-capping is carried out under the following conditions: a temperature of 290-315°C; a time of 15-45min;
in step S4, solvent residual amounts of the high molecular weight polyaryletherketone and the low molecular weight polyaryletherketone are both less than 0.03%.

10. The preparation method according to any one of claims 3 and 5-9, wherein in step S5, the extrusion blending has the following steps:
mixing the high molecular weight polyaryletherketone with the low molecular weight polyaryletherketone and subjecting the mixture to granulation through an extruder;
wherein the extruder is a co-rotating twin-screw extruder.

11. The preparation method according to any one of claims 3 and 5-10, wherein:
in step S5, a mass ratio of the high molecular weight polyaryletherketone to the low molecular weight polyaryletherketone is 2-9: 1-8;
the method further comprises 1 to 3 times steps of extruding granulation.

12. The preparation method according to any one of claims 4-9, wherein in step SII, based on the mass of the organic dihalide, the ratio of the two reaction systems is 2-9: 1-8.
